# EUROPEAN PATENT SPECIFICATION

(11) **EP 3 664 259 B1**
(45) Date of publication and mention of the grant of the patent: **14.04.2021**
(21) Application number: 18210586.6
(22) Date of filing: 05.12.2018
(51) Int. Cl.: H02K 5/173, H02K 7/00, H02K 7/116, F16H 57/04

(54) **INTEGRATED POWER MODULE OF ELECTRIC SCOOTER**
INTEGRIERTES LEISTUNGSMODUL EINES ELEKTROROLLERS
MODULE DE PUISSANCE INTÉGRÉ DE TROTTINETTE ÉLECTRIQUE

(43) Date of publication of application: 10.06.2020
(73) Proprietor: Fukuta Electric & Machinery Co., Ltd., 429 Taichung City (TW)
(72) Inventor: CHANG, CHIN FENG, 428 Taichung City (TW); HUANG, LI HSUAN, 500 Changhua City (TW); KE, HUNG CHUN, 509 Shengang Township (TW)
(74) Representative: Cabinet Chaillot

(56) References cited:
- EP-A1- 2 957 797
- DE-A1- 4 201 373
- DE-A1-102014 208 867
- JP-A- H1 193 877
- JP-A- 2007 154 998
- JP-A- 2008 236 903
- US-A- 5 251 406
- US-A1- 2017 114 640
- US-A1- 2018 283 525
- US-B1- 6 199 652

## Description

### BACKGROUND OF THE INVENTION

### 1. Technical Field

The present invention relates to an electric scooter, and more particularly to an integrated power module of an electric scooter.

### 2. Description of Related Art

Typically, a conventional electric scooter is equipped with a motor to be the power source. In order to reduce a size, a transmission device is mounted to the motor to form an integrated power module.

The transmission device usually includes at least a pair of meshed gears to transmit the power of the motor out. The transmission device is equipped with a lubrication system to keep the gears rotating normally. However, it causes a new problem.

A shaft of the motor will extend into the transmission device to have one of the gears connected thereto. As we know a lubricant is filled in the transmission device, and it has a risk that the lubricant will flow into the motor along the shaft. A conventional way to fix this problem is providing an oil seal on the shaft of motor. It is very hard to find that the oil seal may have problem because the oil seal is received in the integrated power module. It can be found only after the motor is damaged by the lubricant.

In European patent EP 2 957 797 A1, in order to prevent leakage of grease flowing to the side of the motor, a grease blocking member is mounted onto the shaft of the motor in addition to an oil seal.

### BRIEF SUMMARY OF THE INVENTION

In view of the above, the primary objective of the present invention is to provide an integrated power module of an electric scooter, which may prevent the lubricant from flowing into the motor when the motor is running.

In order to achieve the objective of the present invention, a integrated power module of an electric scooter includes a motor unit and a transmission unit. The motor unit includes a motor case, a rotor, a stator, and a motor shaft, wherein the motor case has a motor room therein, in which the rotor, the stator, and the motor shaft are provided. The motor case is provided with a board to seal the motor room. The board is provided with a bore. A holder, which is connected to the board, has a through hole aligned with the bore of the board. The motor shaft passes through the board of the board and the through hole of the holder. The transmission unit includes a lid, a transmission shaft, a first gear, and a second gear. The lid is connected to the motor case to form a lubricant room between the board and the lid. The lubricant room is filled with a lubricant. The lid is provided with a lid bore. The transmission shaft has a portion received in the lubricant room, and passes through the lid bore. The first gear is connected to the motor shaft, and the second gear is connected to the transmission shaft. The first gear is meshed with the second gear, so that the transmission shaft is driven to rotate by the motor unit. The motor shaft is provided with a spiral slot, a portion of which is received in the holder and the rest portion of which is received in the lubricant room. A spiraling direction of the spiral slot from an end in the holder to an opposite end in the lubricant room is the same as a rotating direction of the motor shaft.

In an embodiment, the holder has a chamber therein, and the spiral slot has a portion received in the chamber.

In an embodiment, the board is provided with a lubricant slot, a portion of which is received in the lubricant room, and the rest portion of which is received in the chamber of the holder.

In an embodiment, the holder has a first holder member and a second holder member connected to opposite sides of the board respectively; each of the first holder member and the second holder member has an opening, and the openings are aligned with the bore of the bore to form the through hole.

In an embodiment, each of the first holder member and the second holder member has a cavity, and the cavities face to each other to form a chamber between the first holder member and the second holder member.

In an embodiment, the board is provided with a lubricant slot to communicate the lubricant room with the chamber of the holder, so that the chamber is filled with the lubricant.

In an embodiment, the first holder member has a first half piece and a second half piece connected to each other; the second holder member has a first half piece and a second half piece connected to each other; a boundary of a connection of the first and the second half pieces of the first holder member is perpendicular to a boundary of a connection of the first and the second half pieces of the second holder member.

In an embodiment, the second holder member is provided with an annular slot, in which an O-ring is received; the O-ring presses the second holder member and the board.

In an embodiment, the board is provided with a shaft seat; the transmission shaft has an end rotatably connected to the shaft seat.

In an embodiment, an end of the motor shaft, which is received in the lubricant room, is rotatably connected to the lid.

As a result, the lubricant in the holder will be forced to flow to the lubricant room when the motor shaft is rotating to prevent the lubricant from flowing into the motor unit.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a perspective view of a preferred embodiment of the present invention;
FIG. 2 is an exploded view of the preferred embodiment of the present invention;
FIG. 3 is a sectional view of the preferred embodiment of the present invention;
FIG. 4 is an exploded view of the preferred embodiment of the present invention, showing the board, the holder and the O-ring; and
FIG. 5 is a sectional view of the preferred embodiments of the present invention, showing the board, the holder and the O-ring.

### DETAILED DESCRIPTION OF THE INVENTION

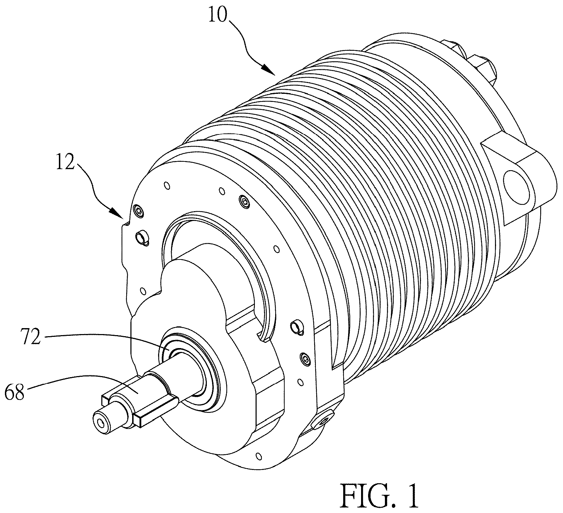

FIG. 1 shows an integrated power module of an electric scooter of the preferred embodiment of the present invention, including a motor unit 10 and a transmission unit 12.

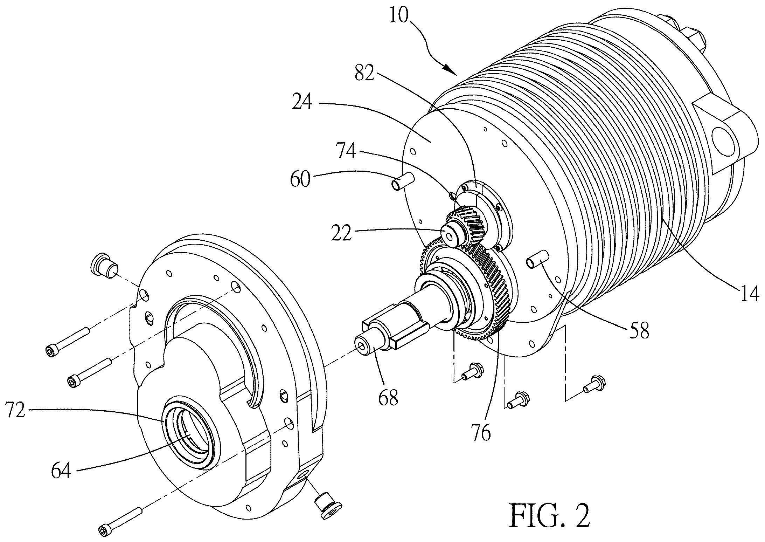

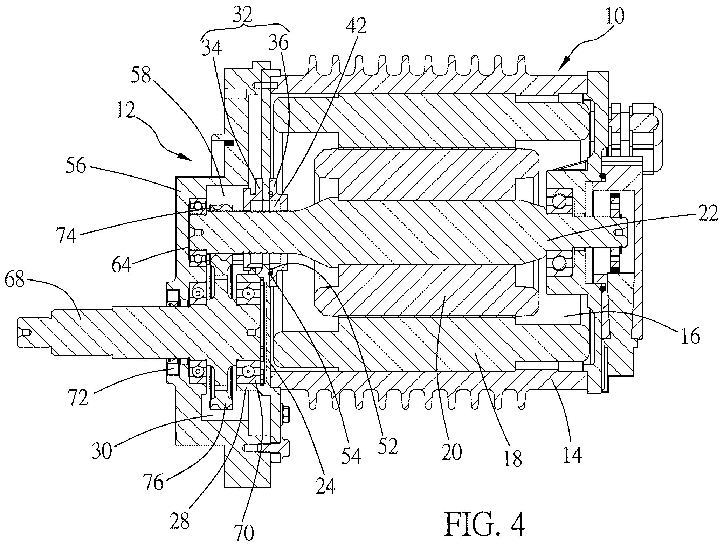

As shown in FIG. 2 and FIG. 4, the motor unit 10 includes a motor case 14, in which a motor room 16 is formed. A stator 18, a rotor 20, and a motor shaft 22 are received. The stator 18 is mounted on an interior side of the motor case 14. The motor shaft 22 is connected to the rotor 20 for rotation by the magnetic effect between the stator 18 and the rotor 20. The above elements are the same as prior arts, so we do not describe the detail here.

The motor case 14 is provided with a board 24 connected to an end thereof to seal the motor room 16. The board 24 has a bore 26, a shaft seat 28, and a lubricant slot 30. The shaft seat 28 has an annular wall on an exterior side of the board 24. The lubricant slot 30 is provided on the exterior side as well, and has an end extending to the bore 26. A holder 32 is connected to the board 24, which has a through hole aligned with the bore 26.

As shown in FIG. 4, the holder 32 has first holder member 34 and a second holder member 36. The first holder member 34 is a disk-like member, having a cavity on an interior side thereof and an opening 38 at a center thereof. The second holder member 36 is the same as the first holder member 34, having a cavity on an interior side thereof and an opening 40 at a center thereof. The first holder member 34 is connected to the exterior side of the board 24 while the second holder member 36 is connected to an interior side of the board 24. Both the openings 38, 40 of the first and the second holder members 34, 36 are aligned with the bore 26 of the board 24 to form the through hole of the holder 32. The cavities of the first and the second holder members 34, 36 face to each other to form a chamber 42 in the holder 32. The bore 26 of the board 24 is received in the chamber 42 of the holder 32, and the lubricant slot 30 has a portion left out of the holder 32, and the rest portion of the lubricant slot 30 is received in the chamber 42 of the holder 32.

The motor shaft 22 of the motor unit 10 extends through the opening 40 of the second holder member 36, the chamber 42, the bore 26 of the board 24, and the opening 38 of the second holder member 34 in sequence. Gaps between the motor shaft 22 and edges of the openings 38, 40 are about 0.2mm, which is much smaller than a gap between the motor shaft 22 and a sidewall of the chamber 42.

The first holder member 34 is formed by a first half piece 44 and a second half piece 46, and both the first and the second half pieces 44, 46 are semi-circular members. The second holder member 36 is the same as the first holder member 34, having a semi-circular first half piece 48 and a semi-circular second half piece 50. In the present embodiment, a boundary of a connection of the first and the second half pieces 44, 46 of the first holder member 34 is perpendicular to a boundary of a connection of the first and the second half pieces 48, 50 of the second holder member 36.

The second holder member 36 is provided with an annular slot 52 on the interior side thereof, in which an O-ring 54 is received. The O-ring 54 presses the second holder member 36 and the interior side of the board 24 to form an airtight condition.

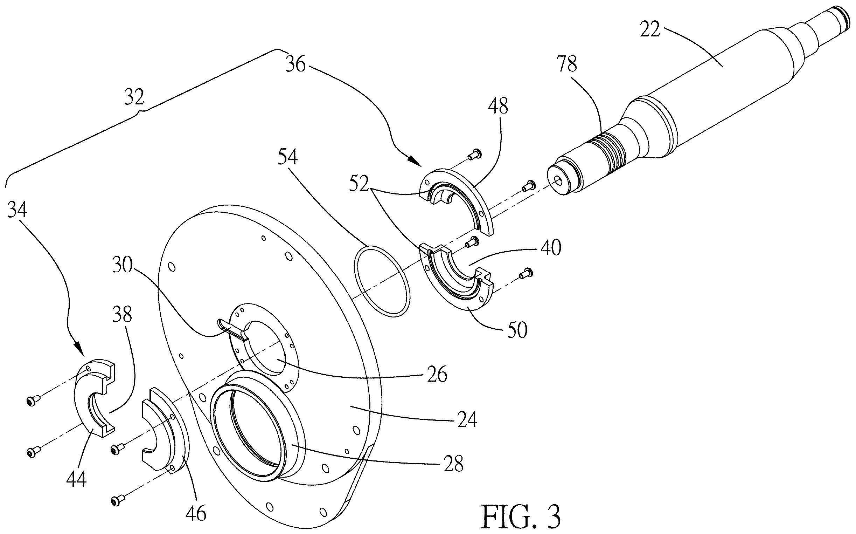

As shown in FIG. 2 and FIG. 3, the transmission unit 14 has a lid 56 connected to the board 24 to form a lubricant room 58 therebetween. Two pipes 60, 62 pass through the motor case 14 and extend into the lubricant room 58. The pipes 60, 62 provide a lubrication circulation, so that the lubricant room 58 is filled with a circulating lubricant. A distal end of the motor shaft 22 is received in the lubricant room 58, and is rotatably connected to the lid 56 through a bearing 66.

The transmission unit 14 has a transmission shaft 68 having an end rotatably connected to the shaft seat 28 through a bearing 70. The lid 56 is provided with a lid bore 64, and the transmission shaft 68 passes through the lid bore 64. A bearing 72 is received in the lid bore 64 and fitted to the transmission shaft 68. With the support of the shaft seat 28 and the bearing 72 in the lid bore 64 the transmission shaft 68 mat rotate stably.

The transmission unit 14 further has a first gear 74 and a second gear 76, both of which are received in the lubricant room 58. The first gear 74 is connected to motor shaft 22, and the second gear 76 is connected to the transmission shaft 68. The first gear 74 is meshed with the second gear 76, so that the transmission shaft 68 is driven to rotate by the motor unit 10.

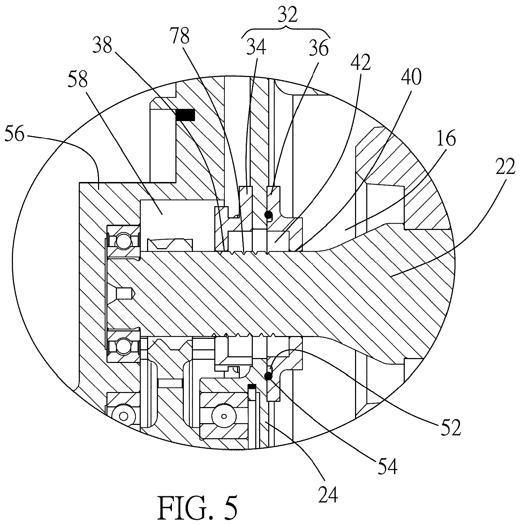

As shown in FIG. 5, the motor shaft 22 is provided with a spiral slot 78, a portion of which is received in the chamber 42 of the holder 32 and the rest portion of which is received in the lubricant room 58. A spiraling direction of the spiral slot 78 from an end in the chamber 42 to an end in the lubricant room 58 is the same as a rotating direction of the motor shaft 22. The spiral slot 78 generates a positive pressure to force the lubricant in the chamber 42 flowing to the lubricant room 58 via the gap between the edge of the opening 38 and the motor shaft 22, and the lubricant enters the chamber 42 via the lubricant slot 30. The positive pressure is increasing while the speed of the motor shaft 22 is increasing, so that the lubricant will have less chance to flow into the motor room 16 via the gap between the motor shaft 22 and the edge of the opening 40.

## Claims

1. An integrated power module of an electric scooter, comprising:
a motor unit (10) including a motor case (14), in which a stator (18), a rotor (20), and a motor shaft (22) are provided, wherein the motor case (14) has a board (24) at an end thereof, and the board (24) is provided with a bore (26); a holder (32), which is connected to the board (24), has a through hole aligned with the bore (26) of the board (24); the motor shaft (22) passes through the bore (26) of the board (24) and the through hole of the holder (32); and
a transmission unit (12) including a lid (56), a transmission shaft (68), a first gear (74), and a second gear (76), wherein the lid (56) is connected to the motor case (14) to form a lubricant room (58) between the board (24) and the lid (56); the lubricant room (58) is filled with a lubricant; both the transmission shaft (68) and the motor shaft (22) have at least a portion received in the lubricant room (58); the first gear (74) is received in the lubricant room (58) and connected to the motor shaft (22), and the second gear (76) is received in the lubricant room (58) and connected to the transmission shaft (68); the first gear (74) is meshed with the second gear (76), so that the transmission shaft (68) is driven to rotate by the motor unit (10);
**characterized in that** the motor shaft (22) is provided with a spiral slot (78), a portion of which is received in the holder (32) and the rest portion of which is received in the lubricant room (58) and that a spiraling direction of the spiral slot (78) from an end in the holder (32) to an end in the lubricant room (58) is the same as a rotating direction of the motor shaft (22).

2. The integrated power module of the electric scooter of claim 1, wherein the holder (32) has a chamber (42) therein, and the spiral slot (78) has a portion received in the chamber (42).

3. The integrated power module of the electric scooter of claim 2, wherein the board (24) is provided with a lubricant slot (30) to communicate the lubricant room (58) with the chamber (42) of the holder (32).

4. The integrated power module of the electric scooter of claim 1, wherein the holder (32) has a first holder member (34) and a second holder member (36), which are connected to opposite sides of the board (24) respectively; each of the first holder member (34) and the second holder member (36) has an openings (38, 40), and the openings (38, 40) are aligned with the bore (26) of the board (24) to form the through hole.

5. The integrated power module of the electric scooter of claim 4, wherein each of the first holder member (34) and the second holder member (36) has a cavity, and the cavities face to each other to form a chamber (42) in the holder (32).

6. The integrated power module of the electric scooter of claim 5, wherein the board (24) is provided with a lubricant slot (30) to communicate the lubricant room (58) with the chamber (42) of the holder (32), so that the chamber (42) is filled with the lubricant.

7. The integrated power module of the electric scooter of claim 4, wherein the first holder member (34) has a first half piece (44) and a second half piece (46) connected to each other; the second holder member (36) has a first half piece (48) and a second half piece (50) connected to each other; a boundary of a connection of the first and the second half pieces (44, 46) of the first holder member (34) is perpendicular to a boundary of a connection of the first and the second half pieces (48, 50) of the second holder member (36).

8. The integrated power module of the electric scooter of claim 4, wherein the second holder member (36) is provided with an annular slot (52), in which an O-ring (54) is received; the O-ring (54) presses the second holder member (36) and the board (24).

9. The integrated power module of the electric scooter of claim 1, wherein the board (24) is provided with a shaft seat (28); the transmission shaft (68) has an end rotatably connected to the shaft seat (28).

10. The integrated power module of the electric scooter of claim 1, wherein an end of the motor shaft (22), which is received in the lubricant room (58), is rotatably connected to the lid (56).

## Patentansprüche

1. Integriertes Leistungsmodul eines Elektrorollers, umfassend:
eine Motoreinheit (10), darin eingeschlossen ein Motorgehäuse (14), in dem ein Stator (18), ein Rotor (20) und eine Motorwelle (22) bereitgestellt sind, wobei das Motorgehäuse (14) eine Platte (24) am Ende davon aufweist und die Platte (24) mit einer Bohrung (26) ausgestattet ist; einen Halter (32), der mit der Platte (24) verbunden ist, ein Durchgangsloch aufweist, das mit der Bohrung (26) der Platte (24) ausgefluchtet ist; die Motorwelle (22) durch die Bohrung (26) der Platte (24) und das Durchgangsloch des Halters (32) verläuft; und
eine Übertragungseinheit (12), darin eingeschlossen einen Deckel (56), eine Übertragungswelle (68), ein erstes Getriebe (74) und ein zweites Getriebe (76), wobei der Deckel (56) mit dem Motorgehäuse (14) verbunden ist, um einen Schmierraum (58) zwischen der Platte (24) und dem Deckel (56) zu bilden, der Schmierraum (58) mit einem Schmiermittel gefüllt ist; sowohl von der Übertragungswelle (68) als auch von der Motorwelle (22) mindestens ein Abschnitt im Schmierraum (58) aufgenommen ist; das erste Getriebe (74) im Schmierraum (58) aufgenommen und mit der Motorwelle (22) verbunden ist, und das zweite Getriebe (76) im Schmierraum (58) aufgenommen und mit der Übertragungswelle (68) verbunden ist; das erste Getriebe (74) mit dem zweiten Getriebe (76) in Eingriff steht, so dass die Übertragungswelle (68) durch die Motoreinheit (10) angetrieben wird, um sich zu drehen;
**dadurch gekennzeichnet, dass** die Motorwelle (22) mit einem Spiralschlitz (78) ausgestattet ist, von dem ein Teil im Halter (32) aufgenommen ist und von dem der restliche Abschnitt im Schmierraum (58) aufgenommen ist, und dass eine spiralförmige Richtung des Spiralschlitzes (78) von einem Ende im Halter (32) zu einem Ende im Schmierraum (58) die gleiche wie eine Drehrichtung der Motorwelle (22) ist.

2. Integriertes Leistungsmodul des Elektrorollers nach Anspruch 1, wobei der Halter (32) eine Kammer (42) darin aufweist und ein Abschnitt des Spiralschlitzes (78) in der Kammer (42) aufgenommen ist.

3. Integriertes Leistungsmodul des Elektrorollers nach Anspruch 2, wobei die Platte (24) mit einem Schmierschlitz (30) ausgestattet ist, um den Schmierraum (58) mit der Kammer (42) der Halters (32) zu verbinden.

4. Integriertes Leistungsmodul des Elektrorollers nach Anspruch 1, wobei der Halter (32) ein erstes Halterelement (34) und ein zweites Halterelement (36) aufweist, die jeweils mit gegenüberliegenden Seiten der Platte (24) verbunden sind; jedes des ersten Halterelements (34) und des zweites Halterelements (36) Öffnungen (38, 40) aufweist und die Öffnungen (38, 40) mit der Bohrung (26) der Platte (24) ausgefluchtet sind, um das Durchgangsloch zu bilden.

5. Integriertes Leistungsmodul des Elektrorollers nach Anspruch 4, wobei jedes des ersten Halterelements (34) und des zweites Halterelements (36) einen Hohlraum aufweist und die Hohlräume einander gegenüber liegen, um eine Kammer (42) im Halter (32) zu bilden.

6. Integriertes Leistungsmodul des Elektrorollers nach Anspruch 5, wobei die Platte (24) mit einem Schmierschlitz (30) ausgestattet ist, um den Schmierraum (58) mit der Kammer (42) des Halters (32) zu verbinden, so dass die Kammer (42) mit dem Schmiermittel gefüllt ist.

7. Integriertes Leistungsmodul des Elektrorollers nach Anspruch 4, wobei das erste Halterelement (34) ein erstes Halbstück (44) und eine zweites Halbstück (46) aufweist, die miteinander verbunden sind; das zweite Halterelement (36) ein erstes Halbstück (48) und ein zweites Halbstück (50) aufweist, die miteinander verbunden sind; eine Grenze einer Verbindung des ersten und des zweiten Halbstücks (44, 46) des ersten Halterelements (34) senkrecht zu einer Grenze einer Verbindung des ersten und des zweiten Halbstücks (48, 50) des zweiten Halterelements (36) ist.

8. Integriertes Leistungsmodul des Elektrorollers nach Anspruch 4, wobei das zweite Halterelement (36) mit einem ringförmigen Schlitz (52) ausgestattet ist, in dem ein O-Ring (54) aufgenommen ist; der O-Ring (54) das zweite Halterelement (36) und die Platte (24) presst.

9. Integriertes Leistungsmodul des Elektrorollers nach Anspruch 1, wobei die Platte (24) mit einem Wellensitz (28) ausgestattet ist; die Übertragungswelle (58) ein Ende aufweist, das drehbar mit dem Wellensitz (28) verbunden ist.

10. Integriertes Leistungsmodul des Elektrorollers nach Anspruch 1, wobei ein Ende der Motorwelle (22), das im Schmierraum (58) aufgenommen ist, drehbar mit dem Deckel (56) verbunden ist.

## Revendications

1. Module de puissance intégré d'un scooter électrique, comprenant :
une unité de moteur (10) comprenant un carter de moteur (14), dans lequel un stator (18), un rotor (20) et un arbre de moteur (22) sont disposés, le carter de moteur (14) ayant un plateau (24) à une extrémité de celui-ci, et le plateau (24) comportant un alésage (26) ; un support (32), qui est relié au plateau (24), a un trou traversant aligné avec l'alésage (26) du plateau (24) ; l'arbre de moteur (22) passe à travers l'alésage (26) du plateau (24) et le trou traversant du support (32) ; et
une unité de boîte de vitesse (12) comprenant un couvercle (56), un arbre de boîte de vitesse (68), un premier engrenage (74) et un second engrenage (76), le couvercle (56) étant relié au carter de moteur (14) pour former une chambre de lubrifiant (58) entre le plateau (24) et le couvercle (56) ; la chambre de lubrifiant (58) est remplie d'un lubrifiant ; à la fois l'arbre de boîte de vitesse (68) et l'arbre de moteur (22) ont au moins une partie reçue dans la chambre de lubrifiant (58) ; le premier engrenage (74) est reçu dans la chambre de lubrifiant (58) et relié à l'arbre de moteur (22), et le second engrenage (76) est reçu dans la chambre de lubrifiant (58) et relié à l'arbre de boîte de vitesse (68) ; le premier engrenage (74) est engrené avec le second engrenage (76), de telle sorte que l'arbre de boîte de vitesse (68) est entraîné en rotation par l'unité de moteur (10) ;
**caractérisé par le fait que** l'arbre de moteur (22) comporte une rainure en spirale (78), dont une partie est reçue dans le support (32) et dont la partie restante est reçue dans la chambre de lubrifiant (58), et qu'une direction de spirale de la rainure en spirale (78) allant d'une extrémité dans le support (32) à une extrémité dans la chambre de lubrifiant (58) est la même qu'une direction de rotation de l'arbre de moteur (22).

2. Module de puissance intégré du scooter électrique selon la revendication 1, dans lequel le support (32) a une chambre (42) à l'intérieur de celui-ci, et la rainure en spirale (78) a une partie reçue dans la chambre (42) .

3. Module de puissance intégré du scooter électrique selon la revendication 2, dans lequel le plateau (24) comporte une rainure de lubrifiant (30) pour faire communiquer la chambre de lubrifiant (58) avec la chambre (42) du support (32).

4. Module de puissance intégré du scooter électrique selon la revendication 1, dans lequel le support (32) a un premier élément de support (34) et un second élément de support (36), qui sont respectivement reliés à des côtés opposés du plateau (24) ; chacun du premier élément de support (34) et du second élément de support (36) a une ouverture (38, 40), et les ouvertures (38, 40) sont alignées avec l'alésage (26) du plateau (24) pour former le trou traversant.

5. Module de puissance intégré du scooter électrique selon la revendication 4, dans lequel chacun du premier élément de support (34) et du second élément de support (36) a une cavité, et les cavités se font mutuellement face pour former une chambre (42) dans le support (32).

6. Module de puissance intégré du scooter électrique selon la revendication 5, dans lequel le plateau (24) comporte une rainure de lubrifiant (30) pour faire communiquer la chambre de lubrifiant (58) avec la chambre (42) du support (32), de telle sorte que la chambre (42) est remplie du lubrifiant.

7. Module de puissance intégré du scooter électrique selon la revendication 4, dans lequel le premier élément de support (34) a une première moitié de pièce (44) et une seconde moitié de pièce (46) reliées l'une à l'autre ; le second élément de support (36) a une première moitié de pièce (48) et une seconde moitié de pièce (50) reliées l'une à l'autre ; une interface d'une liaison des première et seconde moitiés de pièce (44, 46) du premier élément de support (34) est perpendiculaire à une interface d'une liaison des première et seconde moitiés de pièce (48, 50) du second élément de support (36).

8. Module de puissance intégré du scooter électrique selon la revendication 4, dans lequel le second élément de support (36) comporte une fente annulaire (52), dans laquelle un joint torique (54) est reçu ; le joint torique (54) appuie sur le second élément de support (36) et sur le plateau (24).

9. Module de puissance intégré du scooter électrique selon la revendication 1, dans lequel le plateau (24) comporte un siège d'arbre (28) ; l'arbre de transmission (68) a une extrémité reliée de manière rotative au siège d'arbre (28).

10. Module de puissance intégré du scooter électrique selon la revendication 1, dans lequel une extrémité de l'arbre de moteur (22), qui est reçue dans la chambre de lubrifiant (58), est reliée de manière rotative au couvercle (56).
